# EUROPÄISCHE PATENTANMELDUNG

(11) **EP 0 812 760 A2**
(43) Veröffentlichungstag der Anmeldung: **17.12.1997**
(21) Anmeldenummer: 97109428.9
(22) Anmeldetag: 11.06.1997
(51) Int. Cl.: B62J 13/00

(54) **Kettenschutz für einen Antriebsstrang eines Zweiradfahrzeuges**

(30) Priorität: 12.06.1996 DE 29610186 U; 09.07.1996 DE 29611774 U
(71) Anmelder: Horn GmbH + Co. KG, 78244 Gottmadingen (DE)
(72) Erfinder: Burkert, Josef, 78337 Öhningen-Wangen (DE)
(74) Vertreter: Hiebsch, Gerhard F., Dipl.-Ing.

(57) **Zusammenfassung**

Bei einem Kettenschutz für einem Zahnkranz eines Tretlagers mit Tretlagerachse zugeordnetem Antriebsstrang -- insbesondere Fahrradkette -- eines Zweiradfahrzeuges, der mit einem Kettenschutzgehäuse (10) für einen obertrumigen Abschnitt des den Zahnkranz teilweise umfangenden Antriebsstranges versehen ist, weist das Kettenschutzgehäuse (10) eine mit einem etwa kreisförmigen Durchbruch (12) versehene Scheibe aus einem halbkreisförmigen Abschnitt (20) und beidends an diesen anschließenden Heckabschnitt (22) als Zentralgehäuse (14) auf, an das ein getrennt geformter Profilarm (16) für den obertrumigen Strang- oder Kettenabschnitt angesetzt ist. Die Innenkante (19) des Heckabschnittes (22) begrenzt mit der Innenkante (18) des Halbringabschnittes (20) den Durchbruch (12), und der Heckabschnitt ist etwa radial zum Durchbruchzentrum (Z) mit einer Formnut (26) ausgestattet.

## Beschreibung

Die Erfindung betrifft einen Kettenschutz für -- einem Zahnkranz eines Tretlagers mit Tretlagerachse -- zugeordneten Antriebsstrang eines Zweiradfahrzeuges, der ein Kettenschutzgehäuse für einen obertrumigen Abschnitt des den Zahnkranz teilweise umfangenden Antriebsstranges -- bevorzugt einer Fahrradkette -- aufweist.

Bei auf dem Markt befindlichen sogenannten Dreiarm-Tretlagern wird das Obertrum der den Zahnkranz bzw. das Kettenrad mit etwa 180° umschlingenden Radkette von einem einends kufenartig abwärts gebogenen Blechstück rinnenförmigen Querschnittes als Schutzschirm abgedeckt, welcher infolge seines seitlichen Kragmaßes als Hindernis anzusehen ist und zudem häufig verbogen wird. Dieser problematische Kettenschutz verhindert zwar den unmittelbaren Zugriff der Radkette, bedingt aber selbst andere -- auch sicherheitstechnische -- Probleme. Zu deren Vermeidung wurde vom Erfinder ein in der Schrift zum DE-GM 88 11 375 beschriebener Kettenschutz mit einem Kettenschutzgehäuse aus einem teilkreisförmigen Kurvenstück und einem angeformten Formteil geschaffen.

Die Schrift zum DE-GM 84 17 356 offenbart ein Kettenschutzgehäuse aus zwei jeweils beilartigen Formteilen für ein --in Einbaustellung zwischen Fahrzeuggestell und Fahrradkette angeordnetes und von der Pedalachse durchsetztes -- Hinterschild sowie ein einteiliges Vorderschild, die beide zu einem die Fahrradkette einschließenden Kettenschutzgehäuse zusammengesetzt werden. Diese Einzelteile sind jeweils aus einem steifen Kunststoff hergestellt und durch Metallglieder verbunden.

In Kenntnis dieses Standes der Technik hat sich der Erfinder das Ziel gesetzt, das Herstellen sowie die Handhabung eines Kettenschutzes eingangs genannter Art am Zweiradfahrzeug, insbesondere am Fahrrad, zu verbessern.

Zur Lösung dieser Aufgabe führt die Lehre des unabhängigen Anspruches; die abhängigen Ansprüche geben dazu erfindungsgemäße Ausgestaltungen an.

Erfindungsgemäß bietet das Kettenschutzgehäuse eine mit einem etwa kreisförmigen Durchbruch -- für die Pedalachse --versehene Scheibe aus einem halbkreisförmigen Abschnitt und einem beidends an diesen anschließenden Heckabschnitt als Zentralgehäuse an, an das ein getrennt geformter Profilarm als Kettenschutzflügel für den obertrumigen Strang- oder Kettenabschnitt angesetzt ist. Bei einem besonderen Ausführungsbeispiel soll an beide Teile des Heckabschnittes jeweils einer der getrennt gefertigten Profilarme angesetzt sein, wodurch beide Trume des Kettenabschnittes abgedeckt werden.

Es wird also auch hier -- wie in DE-GM 84 17 356 -- von dem Gedanken Gebrauch gemacht, den Kettenschutz aus Teilen zusammenzusetzen; erfindungsgemäß können aus zwei Formteilen, nämlich dem Zentralgehäuse und dem Profilarm, mehrere Ausgestaltungen -- die Angebotspalette erweiternd -- zusammengesetzt sowie miteinander durch Kleben, Vernieten oder Verklemmen verbunden werden.

Als günstig hat es sich erwiesen, daß die Innenkante des Heckabschnittes mit der Innenkante des Halbringabschnittes den Durchbruch begrenzt und der Heckabschnitt etwa radial zum Durchbruchzentrum mit einer Formnut optisch zweigeteilt ist; das Verhältnis der geringen Nutbreite zum Durchbruchsdurchmesser von bevorzugt 100 mm liegt hier zwischen 1 : 20 und 1 : 30, insbesondere bei etwa 1 : 25.

Beim Zusammenbau des erfindungsgemäßen Kettenschutzes ergibt sich, daß durch das Durchbruchzentrum und die Formnut eine Symmetriegerade für das Zentralgehäuse -- oder eine gemeinsame Symmetriegerade für das Zentralgehäuse sowie seine beiden Profilarme -- gelegt werden soll.

Nach einem weiteren Merkmal der Erfindung setzt sich der Heckabschnitt des Zentralgehäuses aus einer an den Halbringabschnitt anschließenden und diesen zu einem Ring ergänzenden Teilringbereich sowie zwei Zipfelflächen zusammen, welche jeweils eine die Formnut heckwärts flankierende Spitze enthalten. Zudem hat es sich als günstig erwiesen, diese Formnut mit zwei Längskanten zu begrenzen, deren jede einem der Abschnittshälften des Heckabschnittes zugeordnet ist und von der Spitze bis zur Innenkante des Durchbruches verläuft.

Die Außenkante der Abschnittshälfte ist geringfügig nach außen gekrümmt und erstreckt sich von der erwähnten Spitze bis zur Außenkante des Halbringabschnittes.

Der Abstand des -- mit einer Schmalseite an das Zentralgehäuse angelegten -- Profilarmes soll zur benachbarten Längskante auf der nach außen gekrümmten Außenkante der Abschnittshälfte etwa einem Viertel der Länge jener Längskante entsprechen. So entsteht eine schnabelartige Heckpartie des Zentralgehäuses

Im Rahmen der Erfindung liegt es, die zur Symmetrieachse weisende innere Längskante des Profilarmes mit der an das Zentralgehäuse anschließenden Schmalseite einen Winkel von etwa 140° bis 150°, bevorzugt etwa 145°, einschließen zu lassen. Dazu begrenzt die äußere Längskante des Profilarmes mit jeder Schmalseite einen spitzen Winkel von etwa 20° bis 30°.

Der in vorstehend erörterter Weise ausgestaltete Profilarm verjüngt sich im übrigen zur freien Heckkante hin, also gegen Fahrtrichtung des Fahrzeuges und kann an der freien Heckkante mit einem Verlängerungsstück versehen sein, dank dessen er -- bevorzugt stufenlos -- in seiner Länge angepaßt zu werden vermag; eine Anpassung des Kettenschutzes durch zusätzliche mechanische Bearbeitung kann so entfallen.

Nach einem weiteren Merkmal der Erfindung können mehrere --bevorzugt drei -- verschiedene Zentralgehäuse oder Kettenscheiben mit unterschiedlichen Durchmessern so eingesetzt werden, daß an jedem Durchmesser der gleiche Profilarm oder Kettenschutzflügel angesetzt werden kann. Mit den drei verschiedenen Durchmessern können Kettenräder unterschiedlicher Zähnezahl -- von 33 bis 46 -- abgedeckt werden.

Es ergibt sich also insgesamt ein sehr gefälliges Kettenschutzgehäuse aus zwei bzw. drei voneinander getrennt aus Kunststoff geformten Teilen mit dem Vorzug, daß diese Teile in verschiedenen Farben erstellt sowie zu unterschiedlichen Ausgestaltungen zusammengesetzt werden können.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisiert in
- Fig. 1,2:: Seitenansichten zweier Kettenschutzgehäuse für ein Tretlager eines Fahrrades;
- Fig. 3:: die Seitenansicht eines Zentralgehäuses des Kettenschutzgehäuses nach Fig. 1,2;
- Fig. 4:: die Seitenansicht eines anderen Zentralgehäuses;.
- Fig. 5,6:: Draufsicht und Heckansicht zu Fig. 4;
- Fig. 7:: einen Profilarm als Kettenschutzflügel des Kettenchutzgehäuses in Seitenansicht;
- Fig. 8:: die Draufsicht auf den Profilarm der Fig. 7;
- Fig. 9:: die Heckansicht zu Fig. 7,8;
- Fig. 10:: eine Verlängerungszunge für den Profilarm in Seitenansicht;
- Fig. 11:: die Untersicht zu Fig. 10;
- Fig. 12:: die Verlängerungszunge in Einbaustellung.

Auf einer Tretlagerachse eines aus Gründen der Übersichtlichkeit nicht dargestellten Fahrrades sind ein Tretlager sowie eine Kettenscheibe mit Kurbelarmen für an diesen auf jeweils einem rechtwinklig abstehenden Achsstab drehbare Pedale angebracht. Um die Kettenscheibe und einen am Hinterrad des Fahrrades vorgesehenen Kettenstern ist eine --durch sie in ein oberes und ein unteres Kettentrum geteilte -- endlose Fahrradkette gelegt.

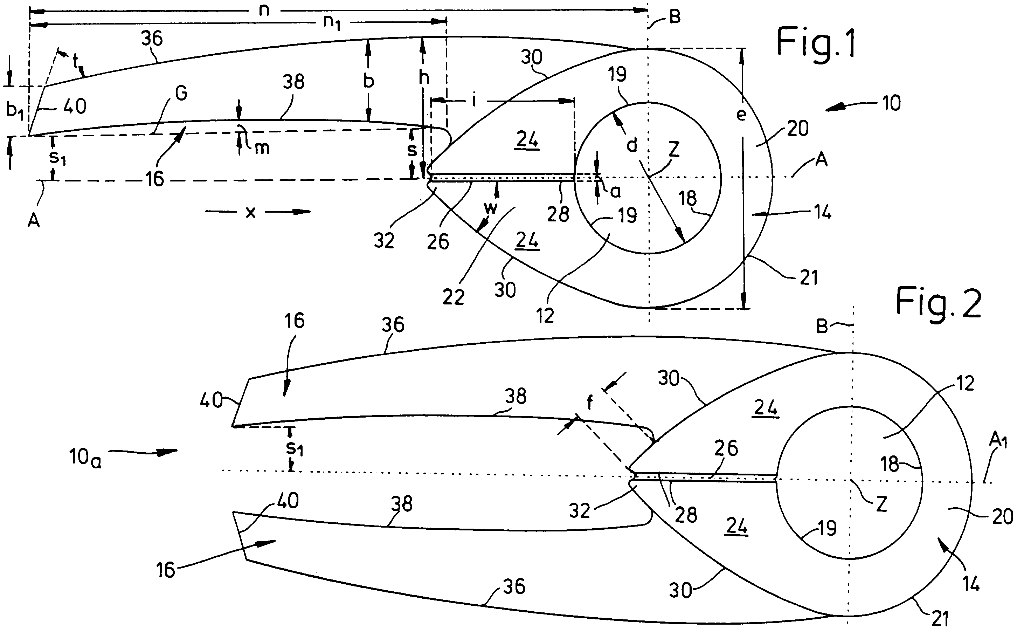

Die Kettenscheibe wird von einem in Fig. 1 zweiteiligen Kettenschutzgehäuse 10 aus Kunststoff überspannt, das einen kreisförmigen Durchbruch 12 für den erwähnten Achsstab eines der Pedale aufweist. Dieser Durchbruch 12 eines Durchmessers d von hier 105 mm ist in einem Zentralgehäuse 14 vorhanden, an das ein das obere der beiden Kettentrume abdeckender Kettenschutzflügel als Profilarm 16 angefügt ist. Das Zentralgehäuse 14 besteht aus einem in Fahrtrichtung x vorderen -- jenen Durchbruch 12 mit seiner halbkreisförmigen Innenkante 18 teilweise begrenzenden -- halbringartigen Abschnitt 20 eines Außendurchmessers e von etwa 170 mm sowie einem seinerseits an den Durchbruch 12 grenzenden, insgesamt schnabelähnlichen Heckabschnitt 22. Letzterer umfaßt beidseits einer Symmetriegeraden A gleiche Abschnittshälften 24, die durch eine in die Symmetriegerade A fallende Formnut 26 der Breite a von hier etwa 4 mm optisch getrennt sind.

Die Formnut 26 wird von -- nahezu radial zum Durchbruchszentrum Z verlaufenden -- parallelen Längskanten 28 einer Länge i von etwa 84 mm begrenzt, deren jede zu jenem Zentrum Z des Durchbruches 12 hin in die einen Viertelkreis beschreibende Innenkante 19 ihrer Abschnittshälfte 24 übergeht. Das freie heckwärtige Ende der Längskante 28 bestimmt mit der -- an die Außenkante 21 des Halbringabschnittes 24 anschließenden -- leicht nach außen gekrümmten Außenkante 30 dieser Abschnittshälfte 24 eine Spitze 32; von dieser gehen die Längskante 28 und die Außenkante 30 unter Bildung eines Winkels w von etwa 40° aus. Die Gesamtlänge c in Richtung der Symmetriegeraden A mißt hier 220 mm.

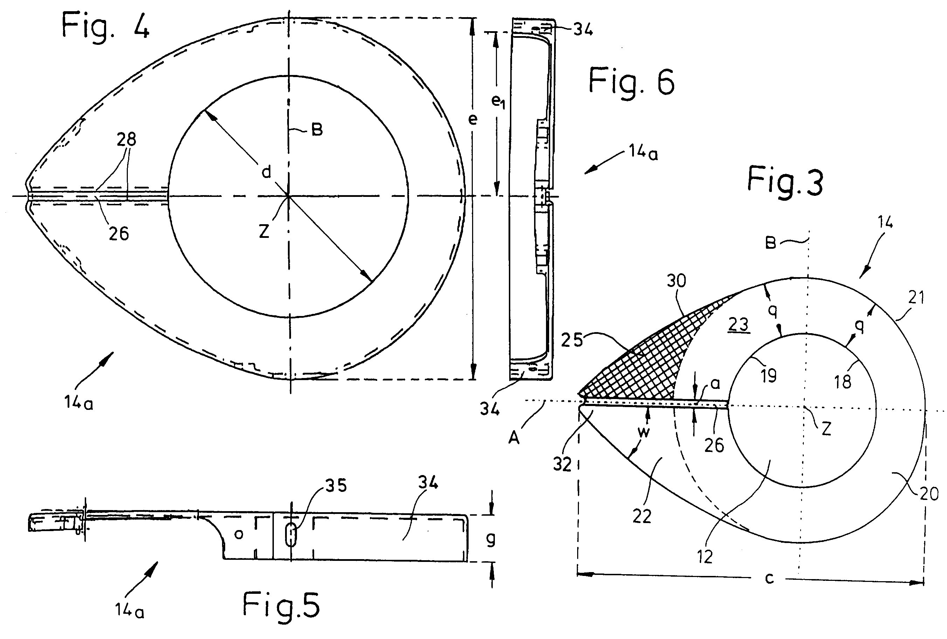

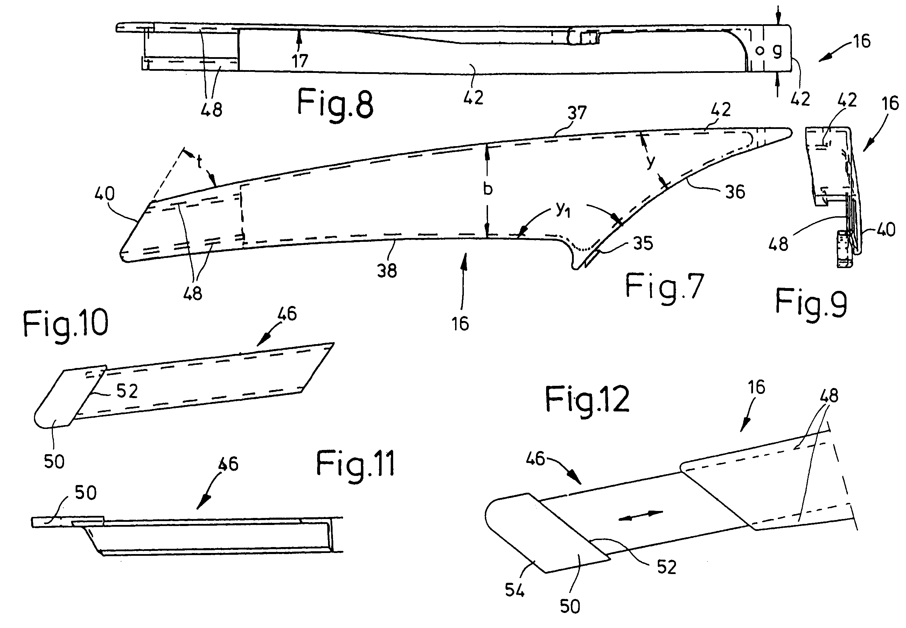

Das Zentralgehäuse 14ₐ der Fig. 4 bis 6 ist von anderer Gestalt; die Länge i der Längskanten 28 jener Formnut 26 ist im Verhältnis zum Innendurchmesser d von 133 mm erheblich verkürzt. In Fig. 5,6 ist die Umfangswand 34 des Zentralgehäuses 14 einer Länge g von etwa 20 mm zu erkennen mit in die -- auf der Symmetriegeraden A des Zentralgehäuses 14 stehenden -- Durchmessergerade B fallenden Langlöcher 35. Der in die Durchmessergerade B fallende Abstand e₁ der Umfangswand 34 zum Zentrum Z mißt hier 90 mm.

In Fig. 3 ist durch Schraffur eine Zwickelfläche 25 hervorgehoben als der Bereich der Abschnittshälfte 24, der zu einem den Halbringabschnitt 21 fortsetzenden Teilringbereich 23 gleicher Breite q hinzukommt.

An die Außenkante 30 der oberen Abschnittshälfte 24 des Zentralgehäuses 14 schließt in Fig. 1 der erwähnte Profilarm 16 -- einer Länge n ab jener Durchmessergeraden B von etwa 380 mm -- mit einer in Fig. 7 erkennbaren und entsprechend gekrümmten vorderen Schmalseite 36 an, die einen Verbindungsnoppen 35 erkennen läßt sowie mit der in Einbaulage äußeren Längskante 37 des Profilarms 16 einen spitzen Winkel y von etwa 25° bestimmt; der Winkel y₁ zwischen jener Schmalseite 36 und der inneren Längskante 38 des Profilarms 16 mißt etwa 145°.

Beide Längskanten 37,38 sind leicht -- in Einbaustellung nach innen -- gekrümmt, und ihr Abstand b vermindert sich zur Heckkante 40 des Profilarms 16 hin. Der Abstand h der äußeren Längskante 37 von der verlängerten Symmetriegeraden A des Zentralgehäuses 14 beträgt an den beschriebenen Spitzen 32 des Heckabschnittes 22 beispielsweise 95 mm. Das Krümmungsmaß der inneren Längskante 38 ergibt sich aus deren mittigen Abstand m von einer Hilfsgerade G der Länge n₁ von etwa 240 mm; deren Abstand s zur Symmetriegeraden A des Zentralgehäuses 14 mißt an diesem etwa 33,2 mm, der Abstand s₁ am freien Armende bzw. einer Heckkante 40 des Profilarmes 16 etwa 32 mm.

Die Heckkante 40 des Profilarms 16 ist in einem Winkel t von etwa 60° zu dessen äußerer Längskante 37 geneigt, und der Abstand f der vorderen Schmalseite 34 des Profilarms 16 von der Längskante 28 an der Spitze 32 beträgt hier 16 mm, der Abstand b₁ der Längskanten 36,38 des Profilarmes 16 voneinander an dessen freiem Ende etwa 30 mm.

An die äußere Längskante 37 des Profilarms 16 schließt etwa rechtwinkelig eine Außenwand 42 der Breite bzw. Länge g an, die in zusammengesetztem Zustand des Kettenschutzes in die Umfangswand 34 an der Außenkante 21 des Halbringabschnittes 20 übergeht. Fig. 8 zeigt, daß die Außenwand 42 an der vorderen Schmalseite 36 endet.

Die Ausgestaltung des Kettenschutzgehäuses 10ₐ nach Fig. 2 ist mit zwei einander beidseits von der verlängerten Symmetriegeraden A des Zentralgehäuses 14 gegenüberliegenden Profilarmen 16 für die beiden Kettentrume versehen.

Die Fig. 10 bis 12 lassen einen Verlängerungsstreifen 46 erkennen, der an der Innenfläche 17 des Profilarmes 16 in rinnenartigen oder schwalbenschwanzförmigen Randführungen 48 verschieblich lagert. Sein freies Ende trägt einen Anschlagschuh 50 mit parallel zur Heckkante 40 des Profilarmes 16 geneigter Innenkante 52, die an jene in völlig eingeschobenem Zustand des Verlängerungsstreifens 46 anschlägt. Nicht wiedergegeben ist ein weiterer Anschlag für den Verlängerungsstreifen 46, der dessen maximale Ausschubstellung bestimmt. Im übrigen verläuft die Endkante 54 jenes in Seitenansicht fast rautenartigen Anschlagschuhes 50 ebenfalls parallel zur Heckkante 40 des Profilarmes 16.

Das Zentralgehäuse 14 wird bevorzugt in drei Größen geformt und mit dem/den beschriebenen Profilarm/en 16 zu einem Kettenschutzgehäuse 10,10ₐ zusammengefügt (Zirkamaße in mm):

| Zentralgehäuse: | | | |
|---|---|---|---|
| Innendurchmesser d: | 105 | 133 | 155 |
| Außendurchmesser e: | 170 | 196 | 225 |
| Gesamtlänge c: | 220 | 244 | 270 |

## Patentansprüche

1. Kettenschutz für einem Zahnkranz eines Tretlagers mit Tretlagerachse zugeordneten Antriebsstrang eines Zweiradfahrzeuges, der ein Kettenschutzgehäuse für einen obertrumigen Abschnitt des den Zahnkranz teilweise umfangenden Antriebsstranges, insbesondere einer Fahrradkette, aufweist,
dadurch gekennzeichnet,
daß das Kettenschutzgehäuse (10,10ₐ) eine mit einem etwa kreisförmigen Durchbruch (12) versehene Scheibe aus einem halbkreisförmigen Abschnitt (20) und beidends an diesen anschließenden Heckabschnitt (22) als Zentralgehäuse (14) aufweist, an das ein getrennt geformter Profilarm (16) für den obertrumigen Strang- oder Kettenabschnitt angesetzt ist.

2. Kettenschutz nach Anspruch 1, dadurch gekennzeichnet, daß die Innenkante (19) des Heckabschnittes (22) mit der Innenkante (18) des Halbringabschnittes (20) den Durchbruch (12) begrenzt und der Heckabschnitt etwa radial zum Durchbruchzentrum (Z) eine Formnut (26) aufweist.

3. Kettenschutz nach Anspruch 2, dadurch gekennzeichnet, daß beidseits der Formnut (26) des Heckabschnittes (22) jeweils einer der getrennt geformten Profilarme (16) angesetzt ist, oder das Verhältnis der Nutbreite (a) zum Durchmesser (d) des Durchbruches (12) von etwa 1 : 20 bis 1 : 30, bevorzugt etwa 1 : 25 beträgt.

4. Kettenschutz nach einem der Ansprüche 1 bis 3, dadurch gekennzeichnet, daß durch das Durchbruchzentrum (Z) und die Formnut (26) eine Symmetriegerade (A) für das Zentralgehäuse (14) gelegt ist, gegebenenfalls für das Zentralgehäuse (14) und seine beiden Profilarme (16).

5. Kettenschutz nach wenigstens einem der Ansprüche 1 bis 4, dadurch gekennzeichnet, daß sich der Heckabschnitt (22) des Zentralgehäuses (14) aus einer an den Halbringabschnitt (20) anschließenden und diesen zu einem Ring ergänzenden Teilringbereich (23) sowie zwei Zipfelflächen (25) zusammensetzt, welche jeweils eine die Formnut (26) flankierende Spitze (32) enthalten.

6. Kettenschutz nach wenigstens einem der Ansprüche 2 bis 5, dadurch gekennzeichnet, daß die Formnut (26) zwei Nutwände als Längskanten (28) begrenzen, deren jede einem der Abschnittshälften (24) des Heckabschnitts (22) zugeordnet ist und von der Spitze (32) bis zur Innenkante (19) des Durchbruchs (12) verläuft, wobei gegebenenfalls die Außenkante (30) der Abschnittshälfte (24) etwas nach außen gekrümmt ist und von der Spitze (32) bis zur Außenkante (21) des Halbringabschnitts (20) verläuft.

7. Kettenschutz nach wenigstens einem der Ansprüche 1 bis 6, dadurch gekennzeichnet, daß an die Außenkante (21) des Halbringabschnitts (20) des Zentralgehäuses (14) etwa rechtwinkelig eine Umfangswand (34) angeformt ist.

8. Kettenschutz nach wenigstens einem der Ansprüche 1 bis 7, gekennzeichnet durch einen Bausatz aus wenigstens zwei Zentralgehäusen (14) unterschiedlicher Bemaßung und zwei Profilarmen (16) spiegelbildlicher Ausgestaltung, wobei gegebenenfalls der Durchmesser (d) des Durchbruches (12) des Zentralgehäuses (14) etwa 100 mm bis 160 mm, bevorzugt etwa 105, 130 bzw. 155 mm, beträgt, und/oder die Gesamtlänge (c) des Zentralgehäuses (14) in Richtung der Symmetriegeraden (A) etwa 210 bis 280 mm, bevorzugt etwa 220;240;270 mm.

9. Kettenschutz nach einem der Ansprüche 1 bis 8, dadurch gekennzeichnet, daß die Breite (q) des Halbringabschnitts (20) etwa einem Drittel des Durchbruchdurchmessers (d) entspricht und/oder daß der Abstand (f) des mit einer Schmalseite (36) an das Zentralgehäuse (14) angelegten Profilarmes (16) zur benachbarten Längskante (28) auf der nach außen gekrümmten Außenkante (21) der Abschnittshälfte (24) etwa einem Viertel der Länge (i) jener Längskante entspricht.

10. Kettenschutz nach wenigstens einem der Ansprüche 1 bis 9, dadurch gekennzeichnet, daß die zur Symmetrieachse (A₁) weisende innere Längskante (38) des Profilarms (16) mit der an das Zentralgehäuse (14) anschließenden Schmalseite (36) einen Winkel (y₁) von etwa 140° bis 150° einschließt und/oder daß die äußere Längskante (37) des Profilarms (16) mit der an das Zentralgehäuse (14) anschließenden Schmalseite (36) einen spitzen Winkel (y) von etwa 20° bis 30° einschließt.

11. Kettenschutz nach wenigstens einem der Ansprüche 1 bis 10, dadurch gekennzeichnet, daß der Profilarm (16) im Bereich seiner äußeren Längskante (37) querschnittlich als Winkelstück ausgebildet und mit einer Außenwand (42) versehen ist.

12. Kettenschutz nach wenigstens einem der Ansprüche 1 bis 11, dadurch gekennzeichnet, daß sich die Breite (b) des Profilarms (16) zur freien Heckkante (40) hin vermindert, wobei gegebenenfalls die freie Heckkante (40) des Profilarms (16) zur äußeren Längskante (36) hin in einem Winkel (t) geneigt ist.

13. Kettenschutz nach wenigstens einem der Ansprüche 1 bis 12, dadurch gekennzeichnet, daß der Profilarm (16) längenveränderlich, insbesondere stufenlos längenveränderlich, ausgebildet ist, wobei gegebenenfalls am freien Ende des Profilarms (16) ein Verlängerungsstreifen (46) verschieblich vorgesehen ist, der über die freie Heckkante (40) hinausragt und/oder der zungenartige Verlängerungsstreifen (46) mit einem Anschlagschuh (48) versehen ist, der mit der freien Heckkante (40) des Profilarms (16) zusammenwirkt.

14. Kettenschutz nach wenigstens einem der Ansprüche 1 bis 13, dadurch gekennzeichnet, daß den Verlängerungsstreifen (46) im Profilarm (16) Randführungen (48) mit rinnenartiger oder schwalbenschwanzförmiger Hinterschneidung zugeordnet sind.
